# EUROPÄISCHE PATENTSCHRIFT

(11) **EP 0 462 403 B1**
(45) Veröffentlichungstag und Bekanntmachung des Hinweises auf die Patenterteilung: **29.06.1994**
(21) Anmeldenummer: 91108093.5
(22) Anmeldetag: 18.05.1991
(51) Int. Cl.: H01M 2/12, H01M 2/04

(54) **Bleiakkumulatoren-Batterie in Blockbauweise mit Entgasungssystem**
Single block construction of a lead accumulator with venting system
Construction monobloc d'un accumulateur au plomb avec système de ventilation

(30) Priorität: 19.06.1990 DE 4019462
(43) Veröffentlichungstag der Anmeldung: 27.12.1991
(73) Patentinhaber: VB Autobatterie GmbH, D-30419 Hannover (DE)
(72) Erfinder: Eisenacher, Werner, Dipl.-Ing., W-3204 Nordstemmen 4 (DE)
(74) Vertreter: Kaiser, Dieter Ralf, Dipl.-Ing.

(56) Entgegenhaltungen:
- EP-A- 0 123 369
- EP-A- 0 274 612
- US-A- 4 851 305

## Beschreibung

### Stand der Technik

Die Erfindung geht aus von einer Bleiakkumulatoren-Batterie nach der Gattung des Hauptanspruchs. Es ist schon eine solche Batterie bekannt (EP 0 274 612 A3), bei der die insbesondere beim Ladevorgang entwickelten Gase (Wasserstoff und Sauerstoff) noch zuviel säurehaltige Aerosole enthalten; diese Aerosole können außerhalb der Batterie infolge der Säure zu Beschädigungen im Batterie-Umfeld führen.

### Vorteile der Erfindung

Die erfindungsgemäße Batterie mit den kennzeichnenden Merkmalen des Hauptanspruchs hat demgegenüber den Vorteil, daß sie infolge eines verbesserten Labyrinthes im Entgasungssystem praktisch keine säurehaltigen Aerosole mehr ins Freie austreten läßt, welche Beschädigungen im Umfeld der Batterie verursachen könnten.

Durch die in den Unteransprüchen aufgeführten Maßnahmen sind vorteilhafte Weiterbildungen und Verbesserungen der im Hauptanspruch angegebenen Batterie möglich. Besonders vorteilhaft ist es, wenn zwischen den Begrenzungswänden der Elektrolyt-Einfüllöffnungen und bzw. mit den Begrenzungswänden der Abdeckkappe jeweils seitlich voneinander getrennte Kammern gebildet sind, die bei kurzzeitigen Kipplagen der Batterie ein Zusammenfließen von Elektrolyt aus verschiedenen Zellengefäßen und damit Kurzschlüsse unterbinden.

### Zeichnung

Ein Ausführungsbeispiel der Erfindung ist in der Zeichnung dargestellt und in der nachfolgenden Beschreibung näher erläutert. Es zeigen Figur 1 ein Explosionsschaubild des deckelseitigen Bereichs einer erfindungsgemäßen Bleiakkumulatoren-Batterie in perspektivischer Darstellung, Figur 2 eine Seitenansicht durch den deckelseitigen Bereich der Bleiakkumulatoren-Batterie, mit einem Vertikalschnitt durch drei Zellengefäße, wobei oberhalb des Zellengefäßes 1 der Schnitt durch eine rohrartige Gasauslaßöffnung führt, oberhalb des Zellengefäßes 2 der Schnitt durch das Entgasungslabyrinth dieses Zellengefäßes 2 verläuft und oberhalb des Zellengefäßes 3 der Schnitt durch eine Elektrolyt-Einfüllöffnung gezeigt ist, und Figur 3 eine Unteransicht der Abdeckkappe.

### Beschreibung des Ausführungsbeispieles

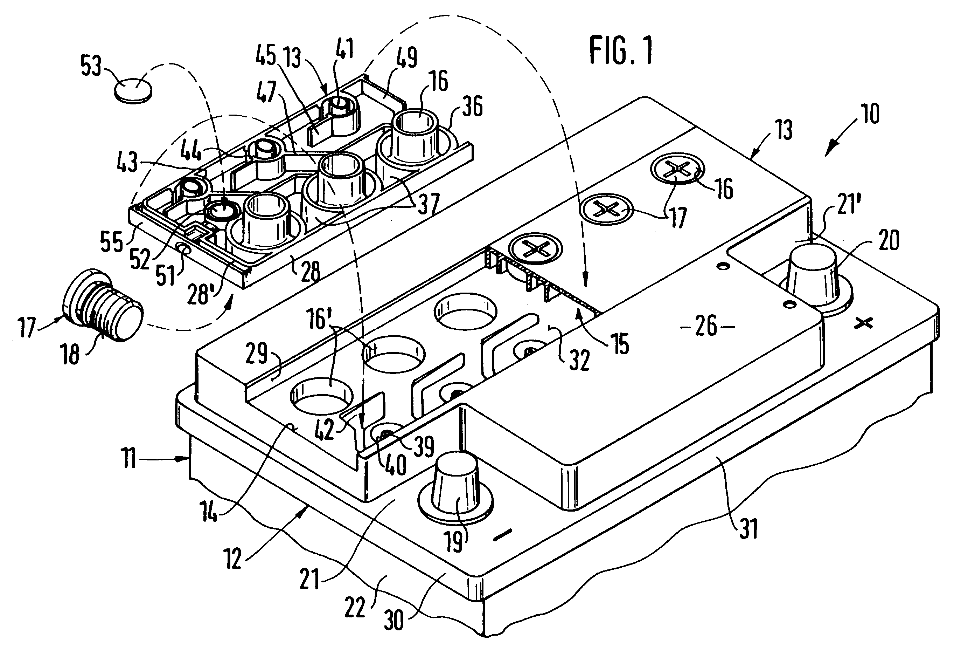

In Figur 1 ist in perspektivischer Ansicht der deckelseitige Bereich einer Bleiakkumulatoren-Batterie 10 dargestellt, deren Gehäuse sich aus einem sechszelligen Blockkasten 11, einem auf der Oberseite dieses Blockkastens 11 mittels bekannter Verfahren (Schmelzschweißen, Vibrationsschweißen) flüssigkeitsdicht befestigten Blockdeckel 12 und einer Abdeckkappe 13 zusammensetzt, die in einer sich in Längsrichtung über den Blockdeckel 12 erstreckenden U-förmigen Vertiefung 14 angeordnet und unlösbar verbunden ist und mit dem Blockdeckel 12 einen Entgasungskanal 15 bildet. Die Abdeckkappe 13 besitzt für jedes Zellengefäß 1 bis 6 jeweils eine Elektrolyt-Einfüllöffnung 16 (auf die noch weiter hinten eingegangen wird), welche bevorzugt mit einem lösbaren Verschlußstopfen 17 abgedichtet sind; die Verschlußstopfen 17 sind bevorzugt mit einem Einschraubgewinde 18 ausgestattet, können aber auch bekannterweise als Steckstopfen ausgebildet sein. Diese vorstehend beschriebenen Bauteile des Gehäuses bestehen in bekannter Weise bevorzugt aus thermoplastischem Kunststoff. Durch den Blockdeckel 12 sind der negative Anschlußpol 19 und der positive Anschlußpol 20 nach oben abgedichtet herausgeführt und dabei in bevorzugter Weise jeweils in einer Nische 21, 21′ des Blockdeckels 12 angeordnet.

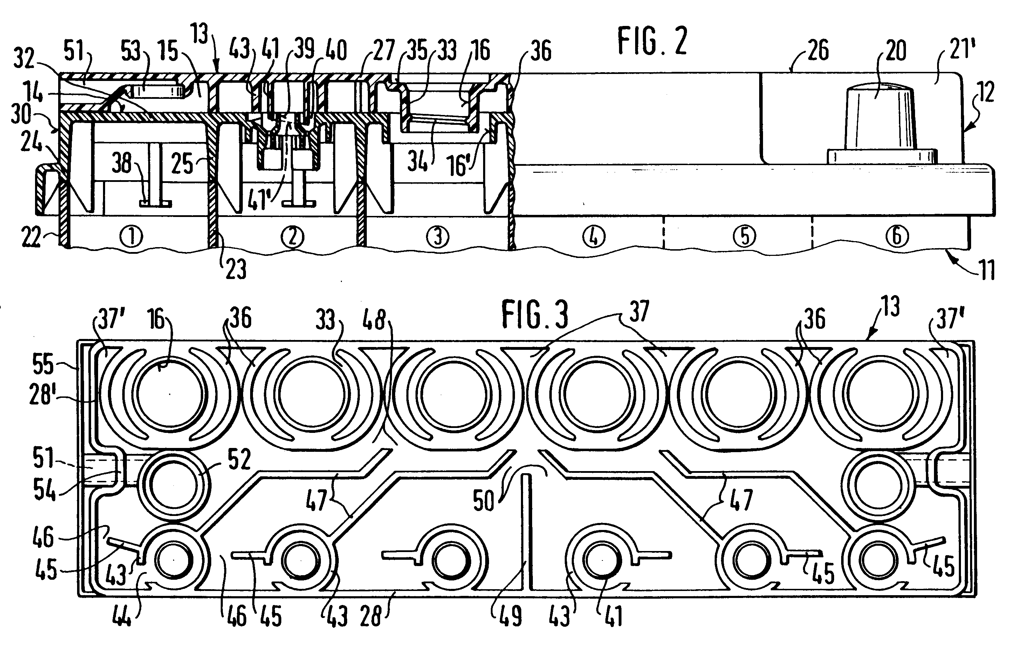

Aus dieser Figur 1 und aus den Figuren 2 und 3 sind die Einzelheiten des Entgasungssystems und der Elektrolyt-Einfüllöffnungen 16 der Batterie 10 ersichtlich:

In der Figur 2 ist der Blockkasten 11 mit seinen sechs Zellengefäßen 1 bis 6 dargestellt, wobei seine Außenwände mit 22 bezeichnet sind und die Zellentrennwände das Bezugszeichen 23 tragen. Auf die Oberseite der Außenwände 22 und der Trennwände 23 des Blockkastens 11 sind entsprechende Außenwände 24 und Trennwände 25 des Blockdeckels 12 - wie schon vorstehend erwähnt - mittels bekannter Verfahren (Schmelzschweißen, Vibrationsschweißen) flüssigkeitsdicht und unlösbar verbunden. Die Oberseite des Blockdeckels 12, in welche die U-förmige Vertiefung 14 eingeformt ist, ist mit Bezugszeichen 26 versehen.

Die in die U-förmige Vertiefung 14 unlösbar eingesetzte Abdeckkappe 13, die mit ihrer nach oben weisenden Kopfplatte 27 im wesentlichen bündig mit der Oberseite 26 des Blockdeckels 12 abschließt, ist mit zum Blockdeckel 12 weisenden Begrenzungswänden 28 bzw. 28′ einteilig hergestellt worden; die beiden Begrenzungswände 28 verlaufen in Längsrichtung der U-förmigen Vertiefung 14 und befinden sich nahe der Seitenwände 29 der Vertiefung 14. Die Begrenzungswände 28′ hingegen sind jeweils zu einer Stirnseite 30 des Blockdeckels 12 bzw. der Batterie 10 hin gerichtet. Die Längsseite des Blockdeckels 12 bzw. der Batterie 10 ist mit Bezugszeichen 31 gekennzeichnet.

Diese Begrenzungswände 28 bzw. 28′ bilden mit ihren freien Enden eine Ebene und sind mit dem Boden 32 dicht und unlösbar mittels bekannter Verfahren (Schmelzschweißen, Vibrationsschweißen) verbunden.

Wie aus den Figuren 1 bis 3 ersichtlich, ist an die zum Blockdeckel 12 weisende Seite der Kopfplatte 27 der Abdeckkappe 13 eine Anzahl weiterer Elemente mit angeformt: Für jedes der Zellengefäße 1 bis 6 ist eine Elektrolyt-Einfüllöffnung 16 vorgesehen, welche in Längsrichtung an der einen Begrenzungswand 28 angeordnet sind und (siehe Figur 2/Zellengefäß 3) als Rohrstutzen 33 in eine damit korrespondierende Elektrolyt-Einfüllöffnung 16′ im Blockdeckel 12 hineinragt. Für den in Figur 2 nicht dargestellten Verschlußstopfen 17 ist im vorliegenden Ausführungsbeispiel ein Innengewinde 34 innerhalb des Stutzens 33 vorgesehen. Um auch den Kopf des Verschlußstopfens 17 bündig mit der Kopfplatte 27 abschließen zu lassen, ist jede Elektrolyt-Einfüllöffnung 16 in der Abdeckplatte 13 mit einer entsprechenden Einsenkung 35 versehen. Die Rohrstutzen 33 sind jeweils von einer Trennwand 36 umgeben, die ebenfalls an die zum Blockdeckel 12 weisende Seite der Kopfplatte 27 mit angeformt sind und mit dem Boden 32 der U-förmigen Vertiefung 14 dicht und unlösbar verbunden ist. Die Trennwände 36 der nebeneinanderliegenden Elektrolyt-Einfüllöffnungen 16 in der Abdeckkappe 13 sind mit Abstand nebeneinander angeordnet und bilden zusammen mit der naheliegenden Begrenzungswand 28 der Abdeckkappe 13 jeweils eine Kammer 37, welche unten durch den Boden 32 des Blockdeckels 12 und oben durch die Kopfplatte 27 der Abdeckkappe 13 begrenzt sind. Entsprechende Kammern 37′ sind bei den Zellengefäßen 1 und 6 auch gebildet zwischen der jeweiligen Trennwand 36 und den Begrenzungswänden 28, 28′. Zur optischen Kontrolle des nicht dargestellten Elektrolytpegels in den Zellengefäßen 1 bis 6 der Batterie 10 können die Elektrolyt-Einfüllöffnungen 16 bzw. 16′ jeweils mit einer angeformten Elektrolytstandsmarke 38 versehen werden, welche durch die Elektrolyt-Einfüllöffnung 16 bei entferntem Verschlußstopfen 17 sichtbar ist. Die in den Zellengefäßen 1 bis 6 befindlichen Plattenblöcke und deren Verbindungen wurden in den Figuren 1 bis 3 nicht mit dargestellt, weil sie im Zusammenhang mit vorliegender Erfindung nicht relevant sind.

Im Zellengefäß 2 der Figur 2 ist ein an sich prinzipiell bekanntes Entgasungssystem dargestellt (siehe EP 0 274 612 A3), welches bei allen Zellengefäßen 1 bis 6 Verwendung findet. Das Entgasungssystem jeden Zellengefäßes 1 bis 6 enthält eine zentrale, als Rohrstutzen im Blockdeckel 12 eingeformte Entlüftungsöffnung 39, die in Richtung der Abdeckkappe 13 weist. Diese rohrstutzenförmige Entlüftungsöffnung 39 ist von einem koaxialen Elektrolyt-Rücklaufsumpf 40 umgeben. Die rohrförmige Entlüftungsöffnung 39 wird von einem rohrförmigen Abdeckstutzen 41 übergriffen, der an die Kopfplatte 27 der Abdeckkappe 13 mit angeformt ist und mit seinem freien Ende bis in den Elektrolyt-Rücklaufsumpf 40 hineinragt, jedoch den aus dem jeweiligen Zellengefäß 1 bis 6 durch die Entlüftungsöffnung 39 entweichenden Gas nicht den Zutritt zum Entgasungskanal 15 verwehrt. Die freie Stirnfläche 41′ des Abdeckstutzens 41 verläuft schräg zur gedachten Längsachse dieses Abdeckstutzens 41 und dient demzufolge mit ihrem tiefsten Punkt dem Abtropfen kondensierter Gase bzw. Säurereste. Der Elektrolyt-Rücklaufsumpf 40 weist an seinem tiefsten Punkt nicht mit Bezugszeichen versehene Schlitze auf, welche dem Zurückfließen von den kondensierten Gasen bzw. von Säureresten ins zugehörige Zellengefäß 1 bis 6 dienen. In diese Elektrolyt-Rücklaufsümpfe 40 führen jeweils Elektrolyt-Rücklaufschrägen 42, die kanalartig in die Oberseite des Bodens 32 der U-förmigen Vertiefung 14 mit eingeformt sind und ebenfalls den Rücklauf von kondensierten Gasen und Säureteilchen dienen, welche bereits in den Entgasungskanal 15 eingedrungen waren.

Mit Abstand um die Abdeckstutzen 41 sind an die Kopfplatte 27 der Abdeckkape 13 Zwischenwände 43 mit angeformt, welche den jeweiligen Elektrolyt-Rücklaufsumpf 40 überdecken, auf dem Boden 32 des Blockdeckels 12 aufgeschweißt sind, jedoch einen Durchlaß 44 aufweisen; dieser Durchlaß 44 weist jeweils im wesentlichen in Richtung der naheliegensten Begrenzungswand 28′ und ist oberhalb eines Teils der Elektrolyt-Rücklaufschräge 42 angeordnet.

An die Außenseite jeder der Zwischenwände 43 ist eine zusätzliche Zwischenwand 45 mit angeformt, die im wesentlichen in Richtung der naheliegenden Begrenzungswand 28′ weist, abdichtend mit dem Boden 32 der U-förmigen Vertiefung 14 verbunden ist und mit der naheliegenden Begrenzungswand 28′ (Zellengefäße 1, 6) bzw. einer eine Entlüftungsöffnung 39 umgebenden Zwischenwand 43 (Zellengefäße 2 bis 4) eine Öffnung 46 beläßt.

Die die Entlüftungsöffnungen 39 der Zellengefäße 1, 2, 5 und 6 umgebenden Zwischenwände 43 sind auf ihrer Außenseite mit einer weiteren Zwischenwand 47 versehen, welche auch wieder an der Unterseite der Kopfplatte 27 der Abdeckkappe 13 mit angeformt und auf dem Boden 32 der U-förmigen Vertiefung 14 abgedichtet befestigt sind und mit ihrem freien Ende im wesentlichen in Richtung der Mitte der gedachten Längsachse der Batterie 10 weisen. Das freie Ende dieser Zwischenwände 47 endet dabei erst etwa dann, wenn sie über das nächste Zellengefäß 2, 3 bzw. 4 und 5 hinwegreichen; die freien Enden dieser Zwischenwände 47 belassen jedoch zwischen den naheliegenden Trennwänden 36 der Elektrolyt-Einfüllöffnungen 16 jeweils einen Durchtritt 48. Diese Zwischenwände 47 können sowohl geradlinig von der Außenseite der Zwischenwände 43 ausgehen, bevorzugterweise werden sie jedoch, wie in der Figur 3 ersichtlich, aus abgewinkelter Form ausgebildet.

Zwischen den Zwischenwänden 43 der Zellengefäße 3 und 4 ist noch eine Zwischenwand 49 mit an die Unterseite der Kopfplatte 27 der Abdeckkappe 13 angeformt, welche einerseits an der Innenseite der Begrenzungswand 28 mit angeformt ist und unter Belassung von Spalten 50 zwischen den freien Enden der Zwischenwände 47 der Zellengefäße 2 bzw. 5 endet; auch diese Zwischenwand 49 ist fest mit dem Boden 32 der U-förmigen Vertiefung 14 im Blockdeckel 12 verbunden. Alle die Zwischenwände 43, welche Entlüftungsöffnungen 39 mit Abstand umgeben, können seitlich mit der naheliegenden Begrenzungswand 28 verbunden sein.

Infolge der vorstehend beschriebenen Gestaltung des Entgasungskanals 15, in welchem ja alle die genannten Zwischenwände 43, 45, 47 und 49 angeordnet sind, sind alle Zellengefäße 1 bis 6 in Hinsicht auf die Gasführung miteinander verbunden.

Für den Austritt von in den Zellengefäßen entwickelten Gasen ins Freie ist in der Abdeckkappe 13 sowohl im Bereich oberhalb des Zellengefäßes 1 als auch im Bereich oberhalb des Zellengefäßes 6 je eine Gasauslaßöffnung 51 mit eingeformt (s. Fig. 2 und 3, Zellengefäß 1), die durch die jeweilige Begrenzungswand 28′ rohrförmig hindurchtritt und von einem bevorzugt waagerecht an der Unterseite der Abdeckkappen-Kopfplatte 27 angeformten Sitz 52 für ein Filter 53 ausgeht; das Filter 53 kann als Scheibe ausgebildet sein, läßt Gase hindurchtreten, hält jedoch Flüssigkeiten zurück. Derartige Filter 53 sind an sich bekannt und werden bevorzugt aus Kunststoff zusammengesintert; das Filter 53 ist in dem Sitz 52 durch Kleben, Schweißen o.ä. festgelegt. Zwischen dem Filter 53 und der Kopfplatte 27 der Abdeckkappe 13 beginnt die rohrartige Gasauslaßöffnung 51 mit flachem Querschnitt, erweitert sich dann jedoch in Richtung zum freien Ende zu einem runden Querschnitt. Um bei dem Verbinden von Abdeckkappe 13 und Boden 32 der U-förmigen Vertiefung 14 die rohrförmige Gasauslaßöffnung 51 nicht zu verformen, sind die Begrenzungswände 28′ der Abdeckkappe 13 geringfügig zur Mitte der Batterie 10 hin versetzt, der die Gasauslaßöffnung 51 direkt überquerende Bereich 54 sogar noch etwas mehr zur Mitte der Batterie hin. Zur Kaschierung dieses Schweißbereiches zwischen den Begrenzungswänden 28′ und dem Boden 32 der Vertiefung 14 des Blockdeckels 12 ist mit geringem Abstand vor den beiden Begrenzungswänden 28′ je eine Vorwand 55 an die Kopfplatte 27 mit angeformt worden; die Gasauslaßöffnung 51 endet im Bereich dieser Vorwand 55, welche bündig mit dem entsprechenden Bereich des Blockdeckels 12 abschließt.

Die in den Zellengefäßen 1 bis 6 insbesondere beim Ladevorgang der Batterie 10 entwickelten Gase Sauerstoff und Wasserstoff, welche gleichzeitig Träger von säurehaltigen Aerosolen sind, gelangen durch die jeweilige Entlüftungsöffnung 39 in den vom Abdeckstutzen 41 umgebenen Bereich und beginnen schon hier teilweise mit ihrer Kondensation; säurehaltiges Kondensat tropft demzufolge schon von der freien Stirnfläche 41′ des Abdeckstutzens 41 in den Elektrolyt-Rücklaufsumpf 40 hinein, aus dem es durch die hier angebrachten Schlitze in das jeweilige Zellengefäß 1 bis 6 zurücktropft. Gase, die innerhalb des Abdeckstutzens 41 noch nicht kondensieren, treten durch den seitlichen Durchlaß 44 in der jeweiligen Zwischenwand 43 in den Entgasungskanal 15 ein und kondensieren hier zum Teil weiter; infolge der Zwischenwände 45, 47 und 49 werden weitere Kondensationsbereiche gebildet; hier entstehendes Kondensat wird von den auf der Oberseite des Bodens 32 des Blockdeckels 12 befindlichen Elektrolyt-Rücklaufschrägen 42 in den jeweiligen Elektrolyt-Rücklaufsumpf 40 zurückgeleitet, von wo es ebenfalls in das entsprechende Zellengefäß 1 bis 6 zurückfließt. Je länger die Zwischenwände 45, 47 bzw. 49 sind, um so mehr Gase werden in Kondensat zurückgebildet; mit besonders langen Gaswegen sind die Zellengefäße 2 bis 5 ausgestattet. Aber auch die Zellengefäße 1 und 6, die den Filtern 53 der jeweiligen Gasauslaßöffnung 51 naheliegen, stehen große Kondensationsflächen dadurch zur Verfügung, daß anstelle der langen Zwischenwände 47 bzw. 49 die zusätzliche, vom Filter-Sitz 52 gebildete Oberfläche mit vorhanden ist.

Da jedes Zellengefäß im mittels Verschlußstopfen 17 verschlossenen Zustand nur über eine relativ kleine Entlüftungsöffnung 39 bzw. über die noch engeren (ohne Bezugszeichen versehenen) Elektrolyt-Zurücktropfschlitze mit dem Entgasungskanal 15 in Verbindung steht, tritt bei kurzzeitigen Kipplagen der Batterie 10 (bis ca. 90 Grad) fast keine Elektrolytflüssigkeit aus den Zellengefäßen 1 bis 6 aus; die Zwischenwände 43, 45 und 47 erschweren zusätzlich den Austritt flüssigen Elektrolyten und unterbinden weitestgehend ein Ineinanderlaufen von Elektrolytflüssigkeit verschiedener Zellengefäße 1 bis 6. Selbstentladungen der Batterie, die von derart entstandenen Flüssigkeitsfilmen ermöglicht werden können, kommen infolge vorliegender Konstruktion praktisch nicht vor. Aber selbst dann, falls infolge irgendwelcher Vorkommnisse Elektrolytflüssigkeit bis hin zu einem Filter 52 gelangen würde, würde das Filter 53 diese zurückhalten und am Austreten aus der Gasauslaßöffnung 51 hindern; lediglich Gase, die aus den Zellengefäßen 1 bis 6 ausgetreten sind, im Entgasungskanal 15 nicht kondensiert wurden, jedoch unter Überdruck stehen, würden aus der Gasauslaßöffnung 51 ins Freie austreten. Bei aus den Zellengefäßen 1 bis 6 in den Entgasungskanal 15 austretendem flüssigem Elektrolyten kann dieser auch in den Kammern 37 bzw. 37′ mit aufgefangen werden, die zwischen den Trennwänden 36 der Elektrolyt-Einfüllöffnungen 16 und den Begrenzungswänden 28, 28′ angeordnet sind. Die Filter 53 dienen darüber hinaus zusätzlich als Flammenschutz, welcher ein Entzünden der in der Batterie 10 befindlichen Gase Wasserstoff und Sauerstoff (Knallgas) infolge außerhalb der Batterie 10 befindlicher Zündquellen (Feuer, Funken, heiße Teile) ausschließt.

Ergänzend sei hinzugefügt, daß das beschriebene Entgasungssystem nicht nur mittels einer Abdeckkappe 13 ausgeführt werden kann, die innerhalb einer sich über die Batterie 10 erstreckenden Vertiefung 14 untergebracht ist, das Entgasungssystem mit einer derartigen Abdeckkappe 13 kann auch direkt auf der Oberseite 26 des Blockdeckels 12 festgelegt sein. Darüber hinaus ist es auch möglich, die an der Unterseite der Kopfplatte 27 der Abdeckkappe 13 angeformten Zwischenwände 43, 45, 47, 49 bzw. Trennwände 36 wahlweise mit an den Blockdeckel 12 anzuformen bzw. teilweise an der Abdeckkappe 13 und teilweise auf der Oberseite 26 des Blockdeckels mit anzuformen.

## Patentansprüche

1. Bleiakkumulatoren-Batterie (10) in Blockbauweise, mit einem auf der Oberseite eines Blockkastens (11) unlösbar befestigten Blockdeckel (12), in dem in Längsrichtung zur Batterie (10) hintereinander angeordnet für jedes Batterie-Zellengefäß (1 bis 6) eine verschließbare Einfüllöffnung (16, 16′) für flüssigen Elektrolyten vorgesehen ist und der außerdem ein gegenüber den Elektrolyt-Einfüllöffnungen (16, 16′) abgeschlossenes, mit den Zellengefäßen (1 bis 6) verbundenes Entgasungssystem aufweist, welches für jedes Zellengefäß (1 bis 6) eine Entlüftungsöffnung (39) besitzt, die in einem allen Zellengefäßen (1 bis 6) gemeinsamen Kanal (15) mündet, der parallel zu den hintereinander angeordneten Elektrolyt-Einfüllöffnungen (16, 16′) verläuft, von der Oberseite (26, 14) des Blockdeckels (12) und einer auf dem Blockdeckel (12) unlösbar befestigten Abdeckkappe (13) gebildet ist, in mindestens einer von einem gasdurchlässigen, Flüssigkeit jedoch zurückhaltenden Filter (53) abgedeckten, ins Freie führenden Gasauslaßöffnung (51) endet und labyrinthbildende Zwischenwände (43, 45, 47, 49; 36) hat, die mit der Oberseite (26, 14) des Blockdeckels (12) und der Unterseite der Abdeckkappe (13) unlösbar verbunden sind, wobei auch jede Entlüftungsöffnung (39) von einer mit einem Durchlaß (44) versehenen Zwischenwand (43) umgegeben ist, dadurch gekennzeichnet, daß an die Außenseite der die jeweiligen Entlüftungsöffnungen (39) umgebenden Zwischenwände (43) mindestens je eine zusätzliche Zwischenwand (45, 47) angeformt ist, wobei die Zwischenwände (47), die den den Batterie-Stirnseiten (30) jeweils naheliegenden zwei Zellengefäßen (1, 2, 5, 6) zugeordnet sind, derart ausgebildet sind, so daß sie über das zur - in Längsrichtung der Batterie (10) gesehen - nächste in Richtung Batterie-Mitte gelegene Zellengefäß (2, 3, 4, 5) hinwegreichen und unter Bildung eines Durchtritts (48) nahe einer Trennwand (36) einer Elektrolyt-Einfüllöffnung (39) enden, und daß die Durchlässe (44) der die Entlüftungsöffnung (39) umgebenden Zwischenwände (43) zur jeweils naheliegenden Stirnseite (30) der Batterie (10) gerichtet sind, und daß außerdem zwischen den Entlüftungsöffnungen (39) der beiden mittleren Zellengefäße (3 und 4) eine zusätzliche Zwischenwand (49) angeformt ist, die die beiden Entlüftungsöffnungen (39) der letztgenannten Zellengefäße (3 und 4) seitlich voneinander trennt und mit den freien Enden der langen, zu den beiden Zellengefäßen (2, 5) gehörenden Zwischenwänden (47) je einen Spalt (50) bildet.

2. Bleiakkumulatoren-Batterie nach Anspruch 1, dadurch gekennzeichnet, daß die Zwischenwände (43, 45, 47, 49), die Begrenzungswände (28, 28′) der Abdeckkappe (13), die Trennwände (36) der Elektrolyt-Einfüllöffnungen (16), die Abdeckstutzen (41) der Entlüftungsöffnungen (39) und auch die rohrartigen Gasauslaßöffnungen (51) mit jeweils einem Sitz (52) für ein Filter (53) an die Abdeckkappe (13) angeformt sind.

3. Bleiakkumulatoren-Batterie nach einem der Ansprüche 1 oder 2, dadurch gekennzeichnet, daß sowohl zwischen den Trennwänden (36) der nebeneinander liegenden Elektrolyt-Einfüllöffnungen (39) und dem jeweils angrenzenden Bereich einer Begrenzungswand (28) als auch zwischen den Trennwänden (36) der Elektrolyt-Einfüllöffnungen (39) für das erste und das letzte Zellengefäß (1 und 6) einer Batterie (10) und den jeweiligen stirnseits naheliegenden Begrenzungswänden (28, 28′) jeweils seitlich voneinander getrennte Kammern (37, 37′) gebildet sind.

4. Bleiakkumulatoren-Batterie nach einem der Ansprüche 1 bis 3, dadurch gekennzeichnet, daß die beiden stirnseitigen, mit dem Blockdeckel (12) verbundenen Begrenzungswände (28′) der Abdeckkappe (13) im Bereich (54) der jeweiligen rohrartigen Gasauslaßöffnung (51) in Richtung der Mitte der Batterie (10) zurückversetzt angeordnet sind.

5. Bleiakkumulatoren-Batterie nach einem der Ansprüche 1 bis 4, dadurch gekennzeichnet, daß das Entgasungssystem derart in einer U-förmigen Vertiefung (14) angeordnet ist, so daß die Kopfplatte (27) der Abdeckkappe (13) im wesentlichen bündig mit der Oberseite (26) des Blockdeckels (12) abschließt.

## Claims

1. Lead storage battery (10) in box-type construction, having a one-piece cover (12) mounted on the top of a monobloc container (11), in which cover there is provided, arranged one behind the other in the longitudinal direction of the battery (10), a closable filling opening (16, 16′) for liquid electrolyte for every battery cell container (1 to 6) and which cover has, in addition, a degassing system which is sealed from the electrolyte filling openings (16, 16′) and connected to the cell containers (1 to 6) and which has, for every cell container (1 to 6), a venting opening (39) which discharges in a channel (15) which is common to all the cell containers (1 to 6) and which extends parallel to the electrolyte filling openings (16, 16′) arranged one behind the other, is formed by the top (26, 14) of the one-piece cover (12) and a blanking cap (13) inseparably mounted on the one-piece cover (12), terminates in at least one gas outlet opening (51) covered by a gas-permeable but liquid-retaining filter (53) and leading into the open air and has labyrinth-forming partitions (43, 45, 47, 49; 36) which are inseparably joined to the top (26, 14) of the one-piece cover (12) and the bottom of the blanking cap (13), each venting opening (39) also being surrounded by a partition (43) provided with a passage (44), characterized in that at least one additional partition (45, 47) is moulded in each case onto the outside of the partitions (43) surrounding the respective venting openings (39), the partitions (47) assigned to the two cell containers (1, 2, 5, 6) situated in each case adjacently to the battery end faces (30) being formed in such a way that they extend over the next cell container (2, 3, 4, 5) situated in the direction of the centre of the battery (viewed in the longitudinal direction of the battery (10)) and terminate near a partition (36) of an electrolyte filling opening (16, 16′) with the formation of a passage (48), and in that the passages (44) in the partitions (43) surrounding the venting opening (39) are directed towards the respectively adjacent end face (30) of the battery (10), and in that, in addition, there is formed on, between the venting openings (39) of the two central cell containers (3 and 4), an additional partition (49) which separates the two venting openings (39) of the last-named cell containers (3 and 4) laterally from one another and forms a gap (50) in each case with the free ends of the long partitions (47) belonging to the two cell containers (2, 5).

2. Lead storage battery according to Claim 1, characterized in that the partitions (43, 45, 47, 49), the boundary walls (28, 28′) of the blanking cap (13), the separating walls (36) of the electrolyte filling openings (16), the capping tubes (41) of the venting openings (39) and also the tubular gas outlet openings (51) are moulded onto the blanking cap (13) with a seat (52) in each case for a filter (53).

3. Lead storage battery according to either of Claims 1 or 2, characterized in that chambers (37, 37′) which are laterally separated from one another in each case are formed both between the separating walls (36) of the adjacently situated electrolyte filling openings (16, 16′) and the respectively adjacent region of a boundary wall (28) and also between the separating walls (39) of the electrolyte filling openings (16, 16′) for the first and the last cell container (1 and 6) of a battery (10) and the respective boundary walls (28, 28′) adjacently to the end faces.

4. Lead storage battery according to one of Claims 1 to 3, characterized in that those two end-face boundary walls (28′) of the blanking cap (13) which are joined to the one-piece cover (12) are arranged so as to be set back in the direction of the centre of the battery (10) in the region (54) of the respective tubular gas outlet opening (51).

5. Lead storage battery according to one of Claims 1 to 4, characterized in that the degassing system is arranged in a U-shaped depression (14) in such a way that the cover plate (27) of the blanking cap (13) terminates essentially flushly with the top (26) of the one-piece cover (12).

## Revendications

1. Batterie (10) d'accumulateur au plomb de construction monobloc avec un couvercle de bac (12) fixé de façon inamovible à la face supérieure d'un bac (11), dans lequel est prévu un orifice de remplissage obturable (16, 16′) pour l'électrolyte liquide de chacun des compartiments de batterie (1 à 6) disposés les uns derrière les autres dans le sens longitudinal de la batterie (10) qui présente en outre un système d'évent solidaire des compartiments (1 à 6), isolé vis-à-vis des orifices de remplissage d'électrolyte (6, 6′), qui possède un orifice d'évent (39) pour chaque compartiment (1 à 6) débouchant dans un canal (15) commun à tous les compartiments, qui s'étend parallèlement aux orifices de remplissage d'électrolyte (16, 16′) disposés les uns derrière les autres, qui est formé de la face supérieure (26, 14) du couvercle de bac (12) et d'un couvercle de fermeture (13) fixé de manière inamovible sur le couvercle de bac (42), qui se termine par un orifice d'évent de gaz (51) débouchant à l'air libre, recouvert d'un filtre (53) perméable au gaz mais retenant le liquide et qui a des parois intermédiaires (43, 45, 47, 49 ; 36) formant un labyrinthe, parois sont reliées de façon inamovible à la face supérieure (26, 14) du couvercle de bac (12) et à la face inférieure du couvercle de fermeture (13), chaque orifice d'évent (39) étant aussi entouré par une paroi intermédiaire (43) munie d'un passage (44), caractérisée en ce qu'on forme au moins une paroi intermédiaire (45, 47) supplémentaire à la face externe des parois intermédiaires (43) entourant chaque orifice d'évent (39), les parois intermédiaires (47) qui correspondent aux deux compartiments (1, 2, 5, 6) proches de chaque face frontale de la batterie (30), sont constitués de telle sorte qu'elles sont dirigées au dessus du compartiment (2, 3, 4, 5) suivant vers le milieu de la batterie - vu dans le sens longitudinal de la batterie (10), - et se terminent en formant un passage (48) à proximité d'une paroi de séparation (36) d'un orifice de remplissage d'électrolyte (39), les passages (44) des parois intermédiaires (43) entourant les orifices d'évent (39) sont dirigés vers chaque face frontale (30) la plus proche de la batterie (10), et en outre on forme une paroi intermédiaire supplémentaire (49) entre les orifices d'évent (39) des deux compartiments médians (3 et 4) qui sépare l'un de l'autre latéralement les deux orifices d'évent (39) des compartiments cités en dernier (3 et 4), et qui forme une fente (50) avec les extrémités libres des parois longues intermédiaires (47) appartenant aux deux compartiments (2, 5).

2. Batterie d'accumulateur au plomb selon la revendication 1, caractérisée en ce que les parois intermédiaires (43, 45, 47, 49), les parois de délimitation (28, 28′) du couvercle de fermeture (13), les parois de séparation (36) des orifices de remplissage d'électrolyte (16), les tubulures de couverture (41) des orifices d'évent (39) et aussi les orifices d'évent de gaz (51) tubulaires, sont formés avec un siège (52) pour un filtre (53) dans le couvercle de fermeture (13).

3. Batterie d'accumulateur au plomb selon l'une des revendications 1 ou 2, caractérisée en ce qu'aussi bien entre les parois de séparation (36) des orifices de remplissage d'électrolyte (39) placées côte à côte et le domaine limitrophe d'une paroi de délimitation (28), qu'entre les parois de séparation (36) des orifices de remplissage d'électrolyte (39) du premier et du dernier compartiment (1 et 6) d'une batterie (10) et chaque parois de délimitation (28, 28′) proche frontalement, sont formées des chambres séparées latéralement l'une de l'autre (37, 37′).

4. Batterie d'accumulateur au plomb selon l'une des revendications 1 à 3, caractérisée en ce que les deux parois de délimitation (28′) frontales du couvercle de fermeture solidaires du couvercle de bac (12) dans le domaine (54) de chaque orifice (51) d'évent de gaz tubulaire, sont disposées symétriquement par rapport au milieu de la batterie (10).

5. Batterie d'accumulateur au plomb selon l'une des revendications 1 à 4, caractérisée en ce que le système d'évent est disposé dans une forme creuse en U (14) de sorte que la plaque supérieure (27) du couvercle de fermeture (13) l'obture essentiellement en affleurement avec la face supérieure (26) du couvercle de bac (12).
